# EUROPEAN PATENT APPLICATION

(11) **EP 4 382 856 A1**
(43) Date of publication of application: **12.06.2024**
(21) Application number: 23214239.8
(22) Date of filing: 05.12.2023
(51) Int. Cl.: G01B 11/24, G01N 21/88, G01N 21/95

(54) **FASTENER BULB INSPECTION DEVICE**

(30) Priority: 06.12.2022 US 202263386272 P; 08.11.2023 US 202318504799
(71) Applicant: The Boeing Company, Arlington, VA 22202 (US)
(72) Inventor: Sisco, Farahnaz, Arlington, 22202 (US)
(74) Representative: Arnold & Siedsma

(57) **Abstract**

Fastener bulb inspection devices and methods of use. A fastener bulb inspection device comprises a support providing a desired vertical position relative to an access hole of a structure with a fastener to be inspected; a gimbal connected to the support; and an inspection sensor connected to the gimbal by a telescopic arm.

## Description

### BACKGROUND INFORMATION

### 1. Field:

The present disclosure relates generally to fastening, and more specifically to a fastener bulb inspection device and methods of measuring a fastener bulb.

### 2. Background:

In a manufacturing environment, such as, for example, the manufacture of aircraft, various parts or components are connected to each other to form structures or substructures. Installation of mechanical fasteners such as, for example, blind fasteners or one-side fasteners, is generally conducted in order that the fastener is in flush alignment (i.e., no gaps) to the surface of the part.

A blind fastener includes an internally threaded body and an externally threaded core bolt that passes through the internally threaded body. One end of the core bolt has an enlarged head, while the other end has an engaging portion. Rotation of the core bolt relative to the body causes axial movement of the core bolt in an outwardly direction from the body. Such axial movement thereby causes deformation of the body outwardly in a manner that forms a bulb that engages an inner surface of the part, thereby securing the blind fastener in place and attaching the parts to each other. When installing a blind fastener, a portion of the head of the core bolt typically fractures leaving a flush surface on the installed fastener head.

The structural integrity of the connection between parts that is facilitated by the fastener may be compromised in the event the fastener has variability in its shape or size and/or the fastening hole of the part(s) to be fastened are offset due to machining tolerances. Inspection of installed fasteners such as, for example blind fasteners or one-side fasteners is often difficult, if not impossible due to the fact that the relatively tight access spaces and/or enclosed location of the fasteners make access to the "blind" side of the part(s) difficult and/or unavailable.

Therefore, it would be desirable to have a method and apparatus that takes into account at least some of the issues discussed above, as well as other possible issues.

### SUMMARY

An example of the present disclosure provides a fastener bulb inspection device. The fastener bulb inspection device comprises a support providing a desired vertical position relative to an access hole of a structure with a fastener to be inspected; a gimbal connected to the support; and an inspection sensor connected to the gimbal by a telescopic arm.

Optionally, the support is telescopic.

Optionally, the device further comprises a cart connected to the support; and a rail configured to enable movement of the support relative to the structure. Preferably, the rail is configured to be connected to a fixture supporting the structure or connected to the structure. Preferably, the rail is configured to be connected to a manufacturing floor.

Optionally, the inspection sensor comprises a cup gauge for mechanical inspection.

Optionally, the inspection sensor comprises a camera. Preferably, the device further comprises a computer system with an image comparator configured to identify an out of tolerance bulb in an image generated by the camera.

Optionally, the inspection sensor comprises a laser.

Optionally, the inspection sensor is one of a number of sensors connected to the telescopic arm, and wherein the number of sensors is further configured to perform alignment of the inspection sensor relative to the fastener.

Optionally, the device further comprises a communication device configured to receive position information from a fastening device for alignment of the inspection sensor relative to the fastener.

Another example of the present disclosure provides a fastener bulb inspection device. The fastener bulb inspection device comprises a telescopic arm; a gimbal connected to a first side of the telescopic arm; and an inspection sensor connected to a second side of the telescopic arm, the inspection sensor configured to inspect a bulb of a fastener.

Optionally, the device further comprises a rail system, wherein the inspection sensor is connected to the rail system to translate relative to a structure comprising the fastener. Preferably, the rail system is connected to a manufacturing floor. Preferably, the rail system is connected to a fixture supporting the structure.

Optionally, the inspection sensor is part of a number of sensors connected to the telescopic arm, wherein the number of sensors comprise at least one of a borescope, a camera, a laser, LIDAR, a cup gauge, or a RFID detector. Preferably, the number of sensors comprises at least one sensor configured to perform alignment of the inspection sensor.

Yet another example of the present disclosure provides a method of inspecting a bulb of a fastener. An inspection sensor is placed into a confined space containing the bulb of the fastener. The inspection sensor is aligned relative to the bulb of the fastener. The bulb of the fastener is inspected. It is determined if the bulb of the fastener is within tolerance.

Optionally, aligning the inspection sensor comprises positioning the inspection sensor above the bulb of the fastener.

Optionally, aligning the inspection sensor comprises positioning the inspection sensor adjacent the bulb of the fastener so that a diameter and a height of the bulb is visible to the inspection sensor.

Optionally, aligning the inspection sensor comprises utilizing numerically controlled movement based on a designed location for the fastener.

Optionally, aligning the inspection sensor comprises identifying the bulb of the fastener within the confined space and moving the inspection sensor relative to the bulb based on the identifying.

Optionally, inspecting the bulb of the fastener comprises generating one of a photo or a video of the bulb of the fastener. Preferably, determining if the bulb of the fastener is within tolerance comprises overlaying the photo of the bulb on a reference image.

Optionally, inspecting the bulb of the fastener comprises at least one of laser inspecting the bulb of the fastener or LIDAR inspecting the bulb of the fastener.

Optionally, aligning the inspection sensor relative to the bulb of the fastener comprises at least one of rotating the inspection sensor, extending the inspection sensor, or retracting the inspection sensor. Preferably, placing the inspection sensor comprises extending a telescopic arm of a fastener bulb inspection device. Preferably, rotating the inspection sensor comprises moving the telescopic arm using a gimbal connected to the telescopic arm.

Optionally, aligning the inspection sensor comprises moving the inspection sensor based on location data received from a fastening device.

Yet another example of the present disclosure provides a method of inspecting a bulb of a fastener. An inspection sensor is placed adjacent a bulb of a fastener. An image of the bulb of the fastener is generated using the inspection sensor. It is determined if the bulb of the fastener is within tolerance by comparing the image to a reference image.

Optionally, comparing the image to the reference image comprises identifying a bulb edge in the image; and identifying if the bulb edge extends past a bulb boundary in the reference image. Preferably, identifying the bulb edge comprises identifying at least one of a side of the bulb or a top of the bulb. Preferably, determining if the bulb of the fastener is within tolerance comprises determining the bulb is out of tolerance if the top is above or below the bulb boundary. Preferably, determining if the bulb of the fastener is within tolerance comprises determining the bulb is out of tolerance if the side is outside of the bulb boundary.

Optionally, the method further comprises generating an out of tolerance indication in response to a determination that the bulb of the fastener is outside of tolerance.

Optionally, comparing the image to the reference image comprises overlaying the reference image and the image.

Optionally, determining if the bulb of the fastener is within tolerance comprises determining at least one of if a diameter of the bulb is in tolerance or if a height of the bulb is in tolerance.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a cross-sectional view of a fastener system after in accordance with an illustrative example;
**Figure 4** is an illustration of a top view of a fastener system after installation in accordance with an illustrative example;
**Figure 5** is an illustration of a fastener bulb inspection device and a structure with a fastener to be inspected in accordance with an illustrative example;
**Figure 6** is an illustration of a fastener bulb inspection device and a structure with a fastener to be inspected in accordance with an illustrative example;
**Figure 7** is an illustration of a fastener bulb inspection device and a number of fasteners to be inspected in accordance with an illustrative example;
**Figure 8** is an illustration of a fastener bulb inspection device in accordance with an illustrative example;
**Figure 9** is an illustration of an overlay of an image with a bulb and a reference image in accordance with an illustrative example;
**Figure 10** is an illustration of an overlay of an image with a bulb and a reference image in accordance with an illustrative example;
**Figure 11** is a flowchart of a method of inspecting a bulb of a fastener in accordance with an illustrative example;
**Figure 12** is a flowchart of a method of inspecting a bulb of a fastener in accordance with an illustrative example;
**Figure 13** is an illustration of an aircraft manufacturing and service method in a form of a block diagram in accordance with an illustrative example; and
**Figure 14** is an illustration of an aircraft in a form of a block diagram in which an illustrative example may be implemented.

### DETAILED DESCRIPTION

The illustrative examples recognize and take into account one or more different considerations. For example, the illustrative examples recognize and take into account that operating robots, such as end effectors on robotic arms, within a manufacturing environment involves additional safety considerations. The illustrative examples recognize and take into account that human operators are prohibited from entering within a set distance of an area while a robot is active in the area. The illustrative examples recognize and take into account that to provide a safe operating condition for human operators, the operating area is typically a large footprint surrounding the robot. The illustrative examples recognize and take into account that it can be desirable to perform operations without the use of robotics to due to the safety requirements for robots within a manufacturing environment.

The illustrative examples provide a fastener bulb inspection device. The fastener bulb inspection device of the illustrative examples is a mechanical system utilizing hard tooling instead of a robot. By utilizing hard tooling fixturing, a smaller platform and a smaller operating space can be provided. By utilizing hard tooling fixturing, additional operations can be performed within the manufacturing area.

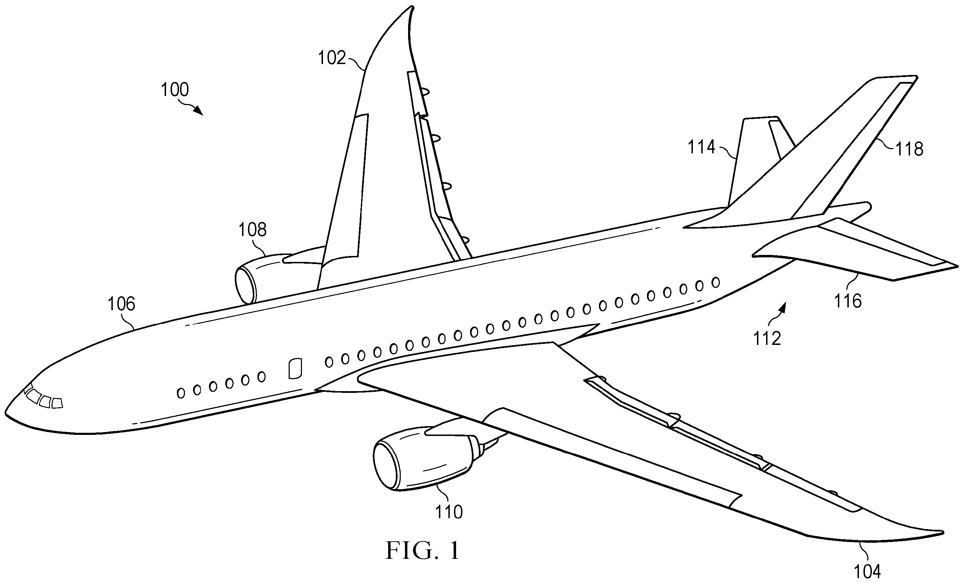

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft having fasteners to be inspected. For example, at least one of body **106,** wing **102,** or wing **104** can have fasteners to be inspected within a confined space.

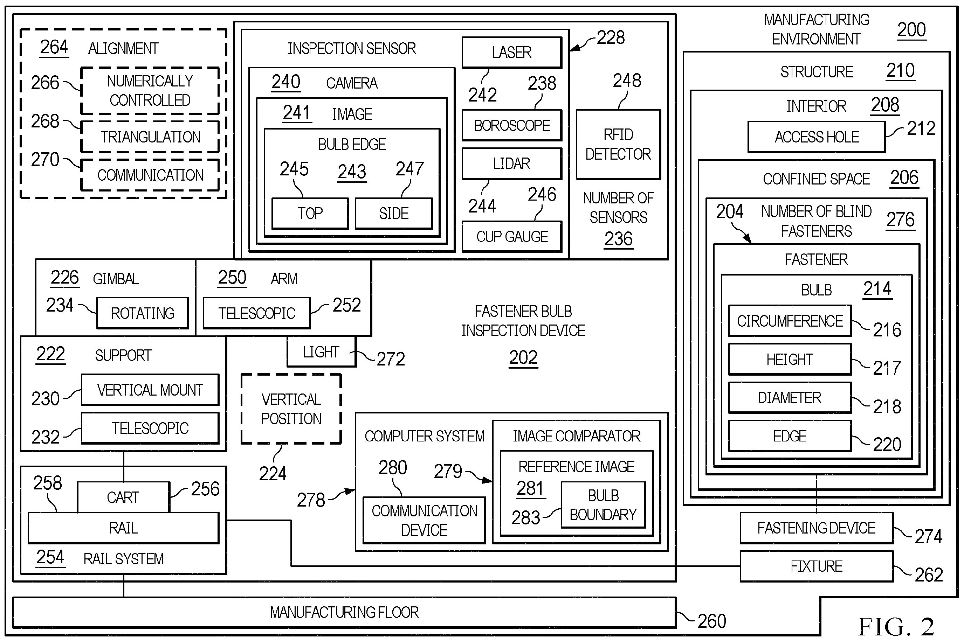

Turning now to **Figure 2****,** an illustration of a block diagram of a manufacturing environment is depicted in accordance with an illustrative example. Portions of aircraft **100** can be manufactured in manufacturing environment **200.** In some illustrative examples, structure **210** is a component of aircraft **100** of Figure **1****,** such as portion of wing **102** or wing **104.**

Fastener bulb inspection device **202** is configured to inspect fastener **204** within confined space **206** of interior **208** of structure **210.** Fastener bulb inspection device **202** comprises support **222,** gimbal **226** connected to support **222,** and inspection sensor **228** connected to gimbal **226** by telescopic **252** arm **250.** Although gimbal **226** is depicted, any desirable universal joint can be provided. Gimbal **226** is configured to provide for movement about three axes. In some illustrative examples, an alternative joint other than gimbal **226** is provided to allow for movement of telescopic **252** arm **250** about three axes.

Although not depicted here, in some other illustrative examples, a rotational joint can connect inspection sensor **228** and telescopic **252** arm **250.** In some illustrative examples, a moveable joint connects inspection sensor **228** to telescopic **252** arm **250** so that inspection sensor **228** can move independently of telescopic **252** arm **250** and gimbal **226.**

Support **222** provides desired vertical position **224** relative to access hole **212** of structure **210** with fastener **204.** In some illustrative examples, support **222** can be referred to as vertical mount **232.** In some illustrative examples, support **222** is telescopic.

In some illustrative examples, cart **256** is connected to support **222.** In some of these illustrative examples, cart **256** is connected to rail **258** of rail system **254.** Rail **258** is configured to enable movement of support **222** relative to structure **210.**

In some illustrative examples, rail **258** is configured to be connected to fixture **262** supporting structure **210.** In other illustrative examples, rail **258** is configured to be connected to manufacturing floor **260.**

Fastener bulb inspection device 202 is used to determine if bulb **214** of fastener **204** is out of tolerance. In some illustrative examples, bulb **214** is out of tolerance if the shape of bulb is not round. In some illustrative examples, bulb **214** is out of tolerance if any diameter **218** of bulb **214** is greater than a set value. In some illustrative examples, to determine if bulb **214** of fastener **204** is out of tolerance, diameter **218** is determined.

Inspection sensor **228** can take any desirable form. In some illustrative examples, inspection sensor **228** can be at least one of borescope **238,** camera **240,** laser **242,** lidar **244,** or cup gauge **246.** In some illustrative examples, inspection sensor **228** comprises cup gauge **246** foe mechanical inspection. In some illustrative examples, inspection sensor **228** comprises camera **240.** In some illustrative examples, inspection sensor **228** comprises laser **242.** Inspection sensor **228** is configured to generate data concerning bulb **214.** In some illustrative examples, the inspection data can comprise one or more of image data, measurement data, and spatial proximity/position data of fastener **204.** The inspection data can be used to determine at least one of circumference **216,** diameter **218,** or edge **220** of bulb **214** of fastener **204.**

Camera **240** can generate image **241** of fastener **204** with bulb **214.** In some illustrative examples, inspection sensor **228** comprises camera **240,** and inspection sensor **228** is positioned adjacent bulb **214** of so that diameter **218** and height **217** of bulb **214** is visible to inspection sensor **228.** When camera **240** is adjacent fastener **204,** camera **240** generates image **241** of fastener **204.**

In some illustrative examples, a comparison of image **241** and reference image **281** is conducted. In some illustrative examples, image **241** is overlaid with reference image **281.**

To perform a comparison of image **241** and reference image **281,** bulb edge **243** is identified. Bulb edge **243** comprises side **247** and top **245.** In some illustrative examples, bulb edge **243** is compared to bulb boundary **283** of reference image **281.** In some illustrative examples, side **247** is compared to bulb boundary **283** to determine if diameter **218** is in tolerance. In some illustrative examples, side **247** comprises one point in image **241.** In some illustrative examples, side **247** comprises multiple points in image **241.** In some illustrative examples, side **247** comprises a line or arc of bulb edge **243.**

In some illustrative examples, top **245** is compared to bulb boundary **283** to determine if height **217** is in tolerance. In some illustrative examples, top **245** comprises one point in image **241.** In some illustrative examples, top **245** comprises multiple points in image **241.** In some illustrative examples, top **245** comprises a line or arc of bulb edge **243.**

Image comparator **279** can receive image **241** and analyze image **241** to determine if bulb **214** is in tolerance. In some illustrative examples, image comparator **279** can overlay image **241** over reference image **281.** In some illustrative examples, image comparator **279** performs image recognition to identify bulb edge **243.** In some illustrative examples, image comparator **279** performs image recognition to identify at least one of top **245** or side **247.**

In some illustrative examples, bulb boundary **283** comprises a pictoral representation of acceptable ranges of values for diameter **218** and height **217.** In some illustrative examples, if bulb edge **243** is positioned within bulb boundary **283,** bulb **214** is in tolerance. In some illustrative examples, if at least a portion of bulb edge **243** extends outside of bulb boundary **283,** at least one of diameter **218** or height **217** of fastener **204** is out of tolerance.

In some illustrative examples, utilizing image comparator **279** and image **241** is a go-no-go analysis by image comparison. If image comparator **279** determines that bulb edge **243** extends outside of bulb boundary **283,** then bulb **214** can be identified as out of tolerance.

In some illustrative examples, a direct go-no-go measurement is conducted. In some of these illustrative examples, cup gauge **246** can be used. Cup gauge **246** is used for mechanical inspection. In some illustrative examples, image data is generated and then analyzed to determine measurements of bulb **214.** In some illustrative examples, camera **240** or borescope **238** generates image data to be analyzed for measurements of bulb **214.**

Number of sensors **236** comprises one or more sensors configured to detect, determine, assess, monitor, measure, quantify, and/or sense information about fastener **204.** As used herein, "sensor" means any device, component, and/or system that is to perform one or more of detecting, determining, assessing, monitoring, measuring, quantifying, and sensing one or more things in manufacturing environment **200.**

In some illustrative examples, inspection sensor **228** can also be used to align inspection sensor **228** relative to fastener **204.** For example, image data from camera **240** can be used to align inspection sensor **228** such that inspection sensor **228** is over bulb **214.** In some illustrative examples, it is desirable for inspection sensor **228** to provide a "top down" view of bulb **214.** In some illustrative examples, it is desirable for inspection sensor **228** to provide data for the entirety of bulb **214.** In some illustrative examples, it is desirable for the entirety of bulb **214** to be visible to inspection sensor **228.**

In some illustrative examples, inspection sensor **228** is one of number of sensors **236** connected to telescopic **252** arm **250,** and wherein number of sensors **236** is further configured to perform alignment of inspection sensor **228** relative to fastener **204.** In some illustrative examples, RFID detector **248** can be used for alignment **264** of inspection sensor **228.**

Alignment **264** of inspection sensor **228** can be a single step or multi-step. In some illustrative examples, alignment **264** includes a macro alignment followed by a micro alignment. In some illustrative examples, alignment **264** includes an initial movement of fastener bulb inspection device **202** based on design data or communicated data from manufacturing and then adjusted based on data received from number of sensors **236.** In some illustrative examples, alignment **264** is performed using data received at communication device **280.** In some illustrative examples, alignment **264** is performed using data received from a drill (not depicted). In some illustrative examples, alignment **264** is performed using data received from fastening device **274.**

Communication device **280** can be present in any desirable location. In some illustrative examples, communication device **280** is present within computer system **278.** In some illustrative examples, computer system **278** can be present on cart **256.** Communication device **280** is configured to receive position information from fastening device **274** for alignment of inspection sensor **228** relative to the fastener **204.**

In some illustrative examples, alignment **264** of inspection sensor **228** is numerically controlled **266.** Alignment **264** of inspection sensor **228** can use numerically controlled **266** movements based a designed location for fastener **204.** In some illustrative examples, inspection of fastener **204** can be performed after alignment **264** the inspection sensor based on the designed location. In some other illustrative examples, the designed location provides an initial location for alignment of inspection sensor **228.**

In some illustrative examples, after moving to the initial location, triangulation **268** is performed to locate fastener **204.** In some illustrative examples, alignment **264** includes communication between fastener bulb inspection device **202** and fastening device **274** regarding an actual position of fastener **204** within manufacturing environment. In some illustrative examples, number of sensors **236** perform further alignment **264** based on a detected location of fastener **204** to position number of sensors **236** relative to fastener **204** prior to inspecting fastener **204.**

In some illustrative examples, alignment **264** of inspection sensor **228** relative to bulb **214** of fastener **204** comprises at least one of rotating inspection sensor **228,** extending inspection sensor **228,** or retracting inspection sensor **228.** Fastener bulb inspection device **202** comprises telescopic **252** arm **250,** gimbal **226** connected to a first side of telescopic **252** arm **250,** and inspection sensor **228** connected to a second side of telescopic **252** arm **250,** inspection sensor **228** configured to inspect bulb **214** of fastener **204.** Gimbal **226** allows for rotating **234** inspection sensor **228.** Telescopic **252** arm **250** allows for extending and retracting inspection sensor **228** in confined space **206** of interior **208** of structure **210.**

In some illustrative examples, alignment **264** of inspection sensor **228** comprises positioning inspection sensor **228** above bulb **214.** In some illustrative examples, alignment **264** of inspection sensor **228** comprises positioning inspection sensor **228** such that the whole of bulb **214** is visible to inspection sensor **228.** Alignment **264** of inspection sensor **228** is performed such that inspection sensor **228** can inspect the whole of bulb **214.**

In some illustrative example, fastener bulb inspection device further comprises rail system **254,** wherein inspection sensor **228** is connected to rail system **254** to translate relative to structure **210** comprising fastener **204.** In some illustrative examples, rail system **254** is connected to manufacturing floor **260.** In some illustrative examples, rail system **254** is connected to fixture **262** supporting structure **210** or connected to structure **210.** In some illustrative examples, cart **256** could run over a skin or other surface of structure **210** if fastener bulb inspection device **202** is light enough to travel on structure **210** without undesirably affecting structure **210.**

In some illustrative examples, inspection sensor **228** is part of number of sensors **236** connected to telescopic **252** arm **250.** In some illustrative examples, number of sensors **236** comprise at least one of borescope **238,** camera **240,** laser **242,** LIDAR **244,** cup gauge **246,** or RFID detector **248.**

Number of sensors **236** is configured for at least one of manual control by a user or automatic control by computer system **278** to detect, determine, assess, monitor, measure, quantify, and/or sense information about fastener **204.** The inspection data can comprise one or more of image data, measurement data, and spatial proximity/position data of fastener **204.** In some illustrative examples, bulb **214** is evaluated by conducting a comparison between the inspection data from inspection sensor **228** and a predetermined threshold measurement.

Fastener **204** is one of number of blind fasteners **276** in confined space **206.** Inspection sensor **228** can be moved within confined space to inspect each of number of blind fasteners **276.** By moving at least one of gimbal **226,** telescopic **252** arm **250,** and support **222,** inspection sensor **228** is placed within confined space **206** relative to a respective fastener of number of blind fasteners **276.**

In some illustrative examples, computer system **278** can be used to store at least one of inspection data from inspection sensor **228** or predetermined tolerance values. In some illustrative examples, computer system **278** can numerically control operation of fastener bulb inspection device **202.**

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example. For example, although fastener bulb inspection device **202** is depicted as connected to rail system **254,** in some illustrative examples, rail system **254** is optional. In some illustrative examples, fastener bulb inspection device **202** is connected to cart **256** that is manual. In some illustrative examples, cart **256** can be pulled or pushed by an operator within manufacturing environment **200.**

Although different types of sensors are listed in number of sensors **236,** any desirable type of sensor can be used. In some illustrative examples, number of sensors **236** comprises one or more sensors including, but not limited to, infrared sensors, proximity/position sensors, laser sensors, ultraviolet sensors, heat sensors, and image sensors (e.g., cameras).

Although the illustrative examples discuss the use of fastener bulb inspection device **202** for the inspection of bulb **214** of fastener **204,** inspection data can be collected for other types of fasteners or other types of features. For example, inspection data can comprise any information corresponding to one or more structural features (e.g., blind bulb, nut, collar, pin protrusion, thin sleeve protrusion, a fastener head, a nut-and-pin protrusion, a swaged collar, a bracket, an insert, a clip, a trimmed or machined feature, etc.) and spatial relationship(s) between the fastener F and the inspection environment E that falls within the scope of this disclosure. In one or more examples, the inspection data is to correspond to the dimensions (e.g., diameter, thickness, and/or height) of one or more structural features, such as, for example, a retention feature or bulb feature of fastener **204.**

Although gimbal **226** is depicted as connecting telescopic **252** arm **250** and support **222,** in some other non-depicted illustrative examples, gimbal **226** can connect inspection sensor **228** to telescopic **252** arm **250.** A gimbal can be present when access hole **212** is sufficiently large enough to accommodate a gimbal to extend through access hole **212.**

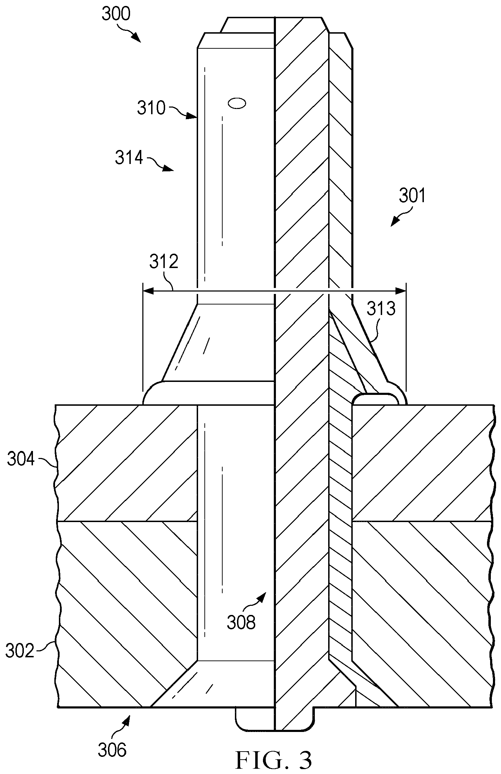

Turning now to Figure **3****,** an illustration of a cross-sectional view of a fastener system after installation is depicted in accordance with an illustrative example. In view **300,** fastener **301** is depicted in installed state **314.** Fastener is a physical implementation of fastener **204** of Figure **2****.** Fastener **301** can be used to join components in aircraft **100.** For example, fastener **301** can be used in one of body **106,** wing **102,** or wing **104.** Fastener **301** can be inspected by fastener bulb inspection device **202** of Figure 2 after installation.

As depicted, fastener **301** joins component **302** and component **304.** Core **308** of fastener **301** is placed through surface **306** to engage body **310** of fastener **301.** Core **308** has been rotated to engage and deform body **310** outwardly forming bulb **313.** As depicted, bulb **313** has diameter **312.** However, diameter **312** is a single measurement from a single view, it is desirable to inspect the whole of bulb **313** so that any out of tolerance conditions can be detected.

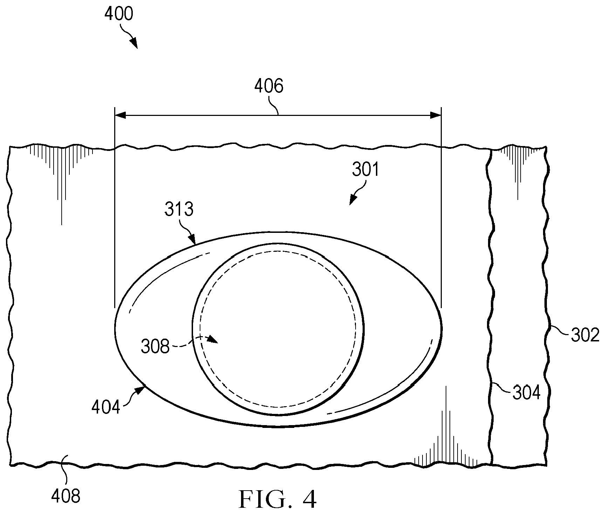

Turning now to **Figure 4****,** an illustration of a top view of a fastener system after installation is depicted in accordance with an illustrative example. View **400** is a top view of fastener **301** of Figure **3****.** In view **400,** bulb **313** has non-symmetrical shape **404.** In this illustrative example, diameter **406** of bulb **313** is out of tolerance.

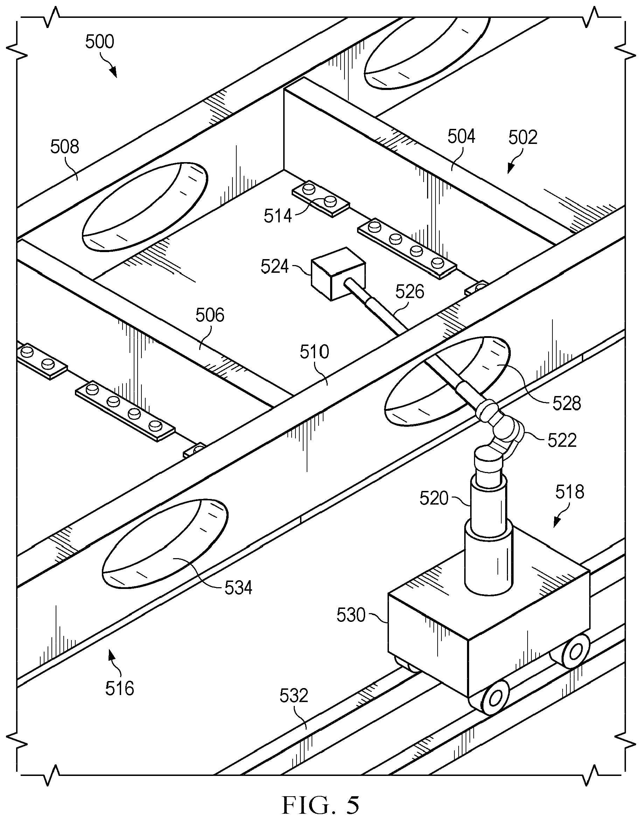

Turning now to **Figure 5****,** an illustration of a fastener bulb inspection device and a structure with a fastener to be inspected is depicted in accordance with an illustrative example. View **500** is a view of structure **502** in a manufacturing environment. In view **500,** a skin of structure **502** has been removed for ease of illustration. In view **500,** structure **502** comprises fasteners **514** to be inspected by fastener bulb inspection device **518.** Fastener bulb inspection device **518** is a physical implementation of fastener bulb inspection device **202** of Figure **2****.** Structure **502** comprises rib **504,** rib **506,** spar **508,** and spar **510** forming confined space **512.** Number of fasteners **514** are present in confined space **512** of structure **502.** Number of fasteners **514** are not visible outside of structure **502** due to the skin (not depicted) forming confined space **512.**

Fastener bulb inspection device **518** is configured to inspect number of fasteners **514** within confined space **512.** More specifically, fastener bulb inspection device **518** is configured to inspect at least one of the size or shape of the bulbs of number of fasteners **514.** In some illustrative examples, fastener bulb inspection device **518** measures a set number of diameters of the bulbs of number of fasteners **514.** In some illustrative examples, fastener bulb inspection device **518** determines if the bulbs of number of fasteners **514** are sufficiently symmetrical. In some illustrative examples, fastener bulb inspection device **518** determines if any of the bulbs of number of fasteners **514** are out of tolerance for size.

Fastener bulb inspection device **518** comprises support **520** providing a desired vertical position relative to access hole **528** of structure **502.** Gimbal **522** is connected to support **520.** Gimbal **522** enables rotational movement of telescopic arm **526** relative to support **520.** Inspection sensor **524** is connected to gimbal **522** by telescopic arm **526.**

Inspection sensor **524** is configured to inspect at least one of the size or shape of the bulb of fastener **514.** Inspection sensor **524** takes any desirable form. In some illustrative examples, inspection sensor **524** comprises a camera. In some illustrative examples, inspection sensor **524** comprises a laser.

In this illustrative example, support **520** is telescopic. By extending support **520,** a vertical position of telescopic arm **526** is changed. The vertical position of telescopic arm **526** can also be adjusted using gimbal **522.**

In this illustrative example, fastener bulb inspection device **518** comprises a rail system, where inspection sensor **524** is connected to the rail system to translate relative to structure **502** comprising fastener **514.** In this illustrative example, the rail system is connected to the manufacturing floor.

In this illustrative example, support **520** is connected to cart **530.** Cart **530** is connected to rail **532.** Rail **532** is configured to enable movement of support **520** relative to structure **502.** In this illustrative example, rail **532** is configured to be connected to a manufacturing floor.

After inspecting fasteners through access hole **528,** cart **530** can move along rail **532** for fastener bulb inspection device **518** to be positioned relative to another access hole, such as access hole **534.** After positioning fastener bulb inspection device **518** relative to access hole **534,** inspection sensor **524** can be sent through access hole **534** to inspect bulbs of fasteners within an additional confined space in structure **502.**

As depicted, gimbal **522** is connected to a first side of telescopic arm **526,** and inspection sensor **524** is connected to a second side of telescopic arm **526.** Inspection sensor **524** is configured to inspect a bulb of fastener **514.**

In some illustrative examples, inspection sensor **524** is part of a number of sensors connected to telescopic arm **526.** The number of sensors can comprise any desirable quantity and type of sensors to allow for alignment of inspection sensor **524** and inspection of fastener **514.** In some illustrative examples, the number of sensors comprise at least one of a borescope, a camera, a laser, LIDAR, a cup gauge, or a RFID detector.

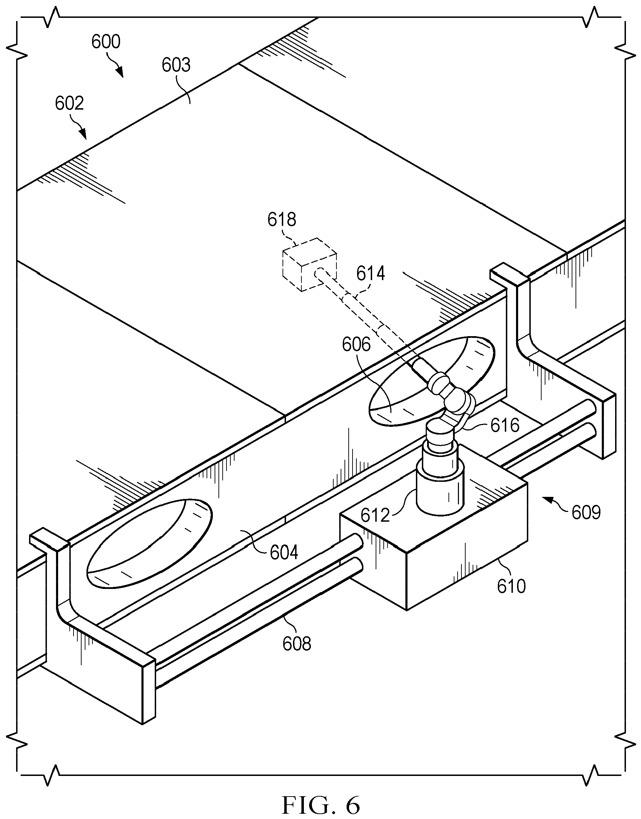

Turning now to **Figure 6****,** an illustration of a fastener bulb inspection device and a structure with a fastener to be inspected is depicted in accordance with an illustrative example. View **600** is a perspective view of structure **602** with fasteners (not depicted) to be inspected. In view **600,** unlike view **500,** skin **603** of structure **602** is illustrated. As can be seen in view **600,** access to a confined space within structure **602** is possible through access hole **606** of spar **604.** As can be seen in view **600,** fasteners in structure **602** are not visible from outside of structure **602.** Further, if a fastener is visible from outside of structure **602,** measurement of the fastener is not possible from outside of structure **602.**

In this illustrative example, fastener bulb inspection device **609** is movable relative to access hole **606** on rail **608.** Fastener bulb inspection device **609** is a physical implementation of fastener bulb inspection device **202** of Figure **2****.** In this illustrative example, rail **608** is connected to fixture **611** supporting structure **602.** With rail **608** connected to fixture **611,** support **612** can extend a shorter distance to reach access hole **606** than if cart **610** traveled on a rail connected to the manufacturing floor, as in Figure **5****.**

In view **600,** a telescopic arm **614** connected to gimbal **616** has been extended through access hole **606** to move number of sensors **618** within the confined space of structure **602** to inspect the fasteners (not depicted).

In this illustrative example, fastener bulb inspection device **609** comprises a rail system, where an inspection sensor of number of sensors **618** is connected to the rail system to translate relative to structure **602** comprising the fastener. In this illustrative example, the rail system is connected to a fixture supporting the structure.

In this illustrative example, support **612** is connected to cart **610.** Cart **610** is connected to rail **608.** Rail **608** is configured to enable movement of support **612** relative to structure **602.** In this illustrative example, rail **608** is configured to be connected to a fixture supporting the structure.

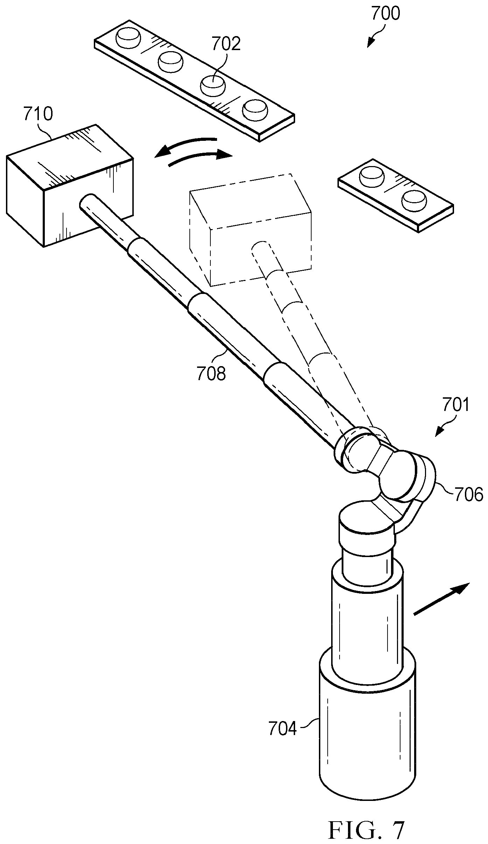

Turning now to **Figure 7****,** an illustration of a fastener bulb inspection device and a number of fasteners to be inspected is depicted in accordance with an illustrative example. Fastener bulb inspection device **701** is a physical implementation of fastener bulb inspection device **202** of Figure **2****.** View **700** is a view of fastener bulb inspection device **701** moving relative to number of fasteners **702** to inspect number of fasteners **702.** As depicted in view **700,** to move number of sensors **710** relative to number of fasteners **702,** telescopic arm **708** can be extended or retracted. Likewise, to move number of sensors **710** relative to number of fasteners **702,** telescopic arm **708** can be moved about gimbal **706.** Finally, to adjust vertical positioning of number of sensors **710,** support **704** can be extended or retracted.

By moving at least one of telescopic arm **708,** gimbal **706,** or support **704,** number of sensors **710** can be positioned over a desired fastener of number of fasteners **702.** By moving at least one of telescopic arm **708,** gimbal **706,** or support **704,** number of sensors **710** can be moved in X, Y, and Z directions. Additionally, number of sensors **710** can be rotated by gimbal **706.**

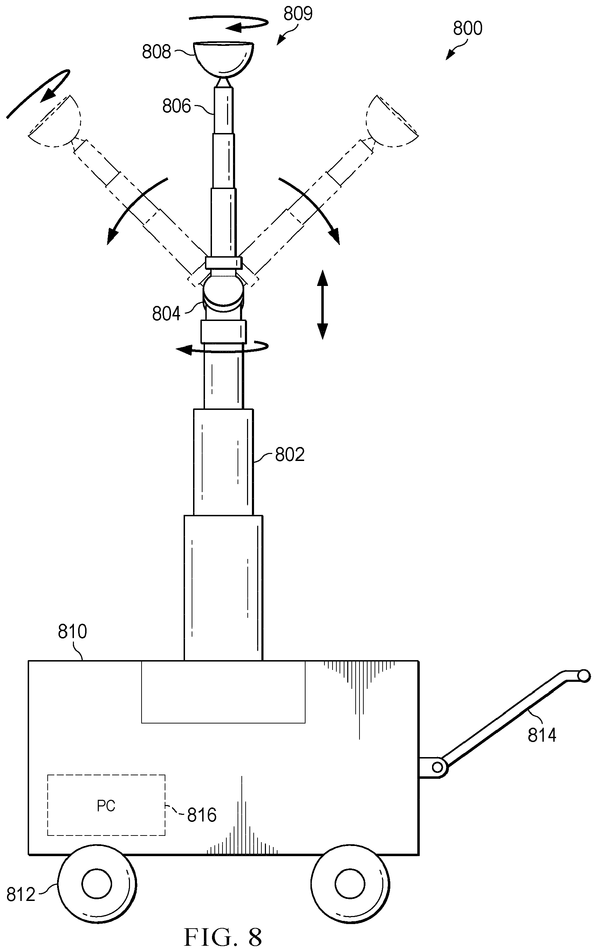

Turning now to **Figure 8****,** an illustration of a fastener bulb inspection device is depicted in accordance with an illustrative example. Fastener bulb inspection device **701** is a physical implementation of fastener bulb inspection device **202** of Figure **2****.** In this illustrative example, support **802** is a telescopic support. Gimbel **804** is connected to support **802** and telescopic arm **806.** In this illustrative example, inspection sensor **808** comprises cup gauge **809** for mechanical inspection. Cup gauge **809** allows for detecting if any diameter of a bulb of a fastener is outside of tolerance. If cup gauge **809** does not fit over the bulb of the fastener, at least one portion of the bulb is out of tolerance. Cup gauge **809** is capable of detecting asymmetric bulbs, such as non-circular bulbs that have a portion that is out of tolerance.

In this illustrative example, fastener bulb inspection device **202** is connected to cart **810** that is moved independently of a rail system. In this illustrative example, cart **810** has wheels **812** and handle **814** that allow cart **810** to be maneuvered independently of rails within a manufacturing environment. In this illustrative example, fastener bulb inspection device **202** can be manually maneuvered by an operator within the manufacturing environment.

As depicted, computer system **816** is present on cart **810.** Computer system **816** is configured to record inspection data generated by inspection sensor **808** during inspection of bulbs. In some illustrative examples, movement of fastener bulb inspection device **800** is controlled by computer system **816.**

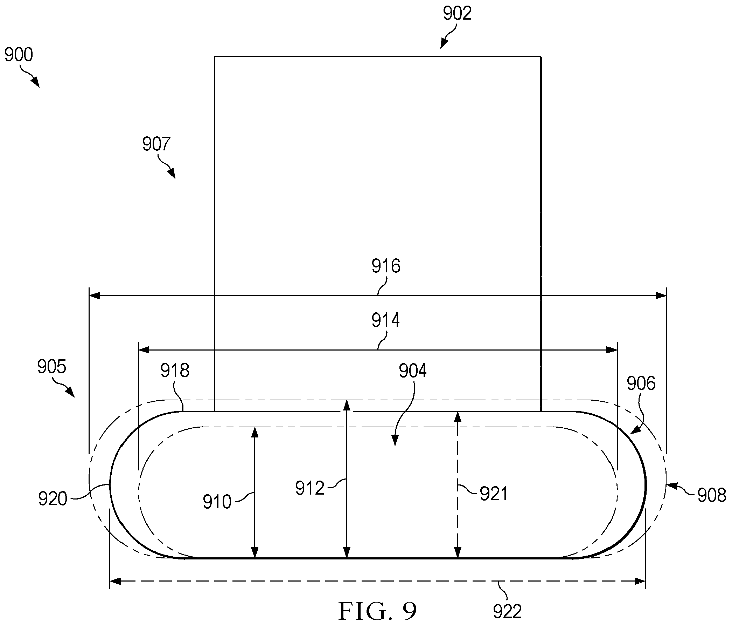

Turning now to **Figure 9****,** an illustration of an overlay of an image with a bulb and a reference image is depicted in accordance with an illustrative example. In view **900,** image **902** of bulb **904** is compared to reference image **905.** Image **902** can be an implementation of image **241** of **Figure 2****.** Image **902** can be an image of bulb **214** of **Figure 2****.** Bulb **904** can be an implementation of bulb **313** of **Figures 3** and **4****.** Image **902** can be an image of any of fasteners **514** of **Figure 5****.** Image 902 can be generated by number of sensors **618** of **Figure 6****.** Image **902** can be generated by number of sensors **710** of **Figure 7****.**

To determine if bulb **904** of fastener **907** is within tolerance by comparing image **902** to reference image **905.** In some illustrative examples, comparing image **902** to reference image **905** comprises identifying bulb edge **906** in image **902.** In some illustrative examples, comparing image **902** to reference image **905** comprises identifying if the bulb edge **906** extends past bulb boundary **908** in reference image **905.**

Bulb boundary **908** comprises minimum height **910** and maximum height **912** for a bulb to be in tolerance. Bulb boundary **908** comprises minimum diameter **914** and maximum diameter **916** for a bulb to be in tolerance.

As depicted, bulb edge **906** is positioned within bulb boundary **908.** Accordingly, bulb **904** can be determined to be in tolerance.

In some illustrative examples, identifying bulb edge **906** comprises identifying at least one of side **920** of bulb **904** or top **918** of bulb **904.** In some illustrative examples, determining if bulb **904** of fastener **907** is within tolerance comprises determining bulb **904** is out of tolerance if top **918** is above or below bulb boundary **908.** In some illustrative examples, determining if bulb **904** of fastener **907** is within tolerance comprises determining bulb **904** is out of tolerance if side **920** is outside of bulb boundary **908.** In some illustrative examples, determining if bulb **904** of fastener **907** is within tolerance comprises determining bulb **904** is out of tolerance if any portion of bulb edge **906** extends outside of bulb boundary **908.**

In this illustrative example, comparing image **902** to reference image **905** comprises overlaying reference image **905** and image **902.** In some illustrative examples, determining if the bulb of the fastener is within tolerance comprises determining at least one of if diameter **922** of bulb **904** is in tolerance or if a height **921** of bulb **904** is in tolerance.

In this illustrative example, bulb edge **906** is within bulb boundary **908.** In this illustrative example, bulb **904** is in tolerance.

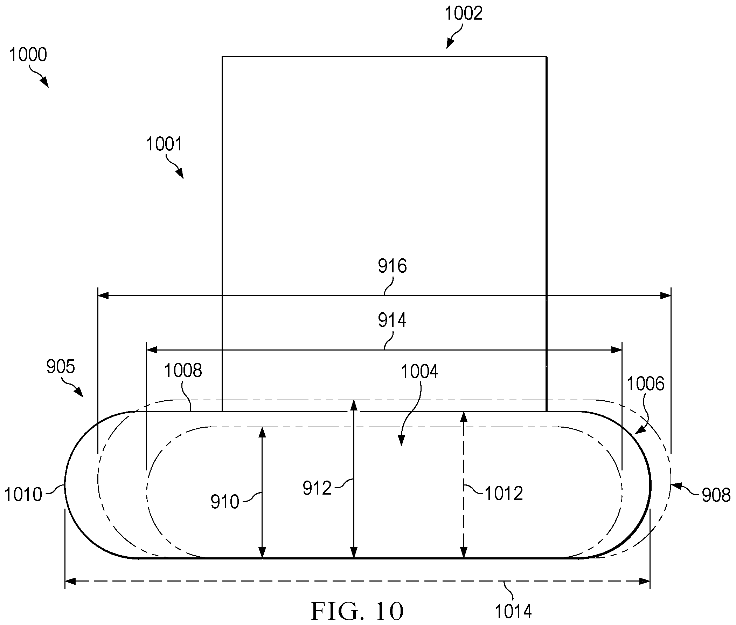

Turning now to **Figure 10****,** an illustration of an overlay of an image with a bulb and a reference image is depicted in accordance with an illustrative example. View **1000** is a view of image **1002** overlaid with reference image **905.** In view **1000,** bulb **1004** of fastener 1001 has bulb edge **1006.** Bulb edge **1006** has top **1008** and side **1010.** In this illustrative example, height **1012** of bulb **1004** is in tolerance. In this illustrative example, diameter **1014** of bulb **1004** is out of tolerance.

In this illustrative example, bulb edge **1006** extends outside of bulb boundary **908.** In this illustrative example, side **1010** of bulb edge **1006** is outside of bulb boundary **908.** In this illustrative example, comparing bulb edge **1006** of image **1002** to bulb boundary **908** of reference image **905** identifies an out of tolerance condition.

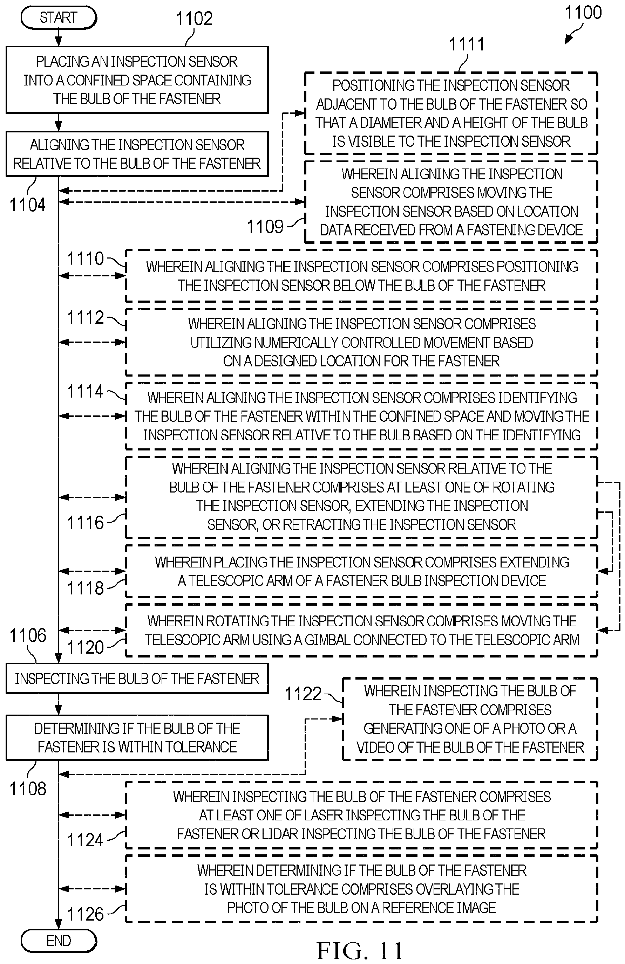

Turning now to **Figure 11****,** a flowchart of a method of inspecting a bulb of a fastener is depicted in accordance with an illustrative example. Method **1100** can be performed using fastener bulb inspection device **202** of Figure **2****.** Method **1100** can be performed to inspect fastener **301** of Figures **3** and **4** after installation. Method **1100** can be performed using fastener bulb inspection device **518** of Figure **5****.** Method **1100** can be performed using fastener bulb inspection device **609** of Figure **6****.** Method **1100** can be performed using fastener bulb inspection device **703** of Figure **7****.** Method **1100** can be performed using fastener bulb inspection device **800** of Figure **8****.**

Method **1100** places an inspection sensor into a confined space containing the bulb of the fastener (operation **1102).** Method **1100** aligns the inspection sensor relative to the bulb of the fastener (operation **1104).** Method **1100** inspects the bulb of the fastener (operation **1106).** Method **1100** determines if the bulb of the fastener is out of tolerance (operation **1108).** Afterwards, method **1100** terminates.

In some illustrative examples, the bulb of the fastener can be inspected after fastening operations are completed and the bulb is formed. In some illustrative examples, the bulb of the fastener can be inspected during forming of the bulb. For example, images or videos of the bulb can be taken as the bulb is formed.

In some illustrative examples, aligning the inspection sensor comprises moving the inspection sensor based on location data received from a fastening device (operation **1109).** In some illustrative examples, aligning the inspection sensor comprises positioning the inspection sensor above the bulb of the fastener (operation **1110).** In some illustrative examples, aligning the inspection sensor comprises positioning the inspection sensor so that the whole of the bulb is visible to the inspection sensor. In some illustrative examples, aligning the inspection sensor comprises positioning the inspection sensor adjacent the bulb of the fastener so that a diameter and a height of the bulb is visible to the inspection sensor (operation **1111).**

In some illustrative examples, aligning the inspection sensor comprises utilizing numerically controlled movement based on a designed location for the fastener (operation **1112).** In some illustrative examples, inspection of the fastener can be performed after aligning the inspection sensor based on the designed location. In some other illustrative examples, the designed location provides an initial location for aligning the inspection sensor. In some illustrative examples, after moving to the initial location, the number of sensors perform a further alignment based on a detected location of the fastener to position the number of sensors relative to the fastener prior to inspecting the fastener.

In some illustrative examples, aligning the inspection sensor comprises identifying the bulb of the fastener within the confined space and moving the inspection sensor relative to the bulb based on the identifying (operation **1114).** Identifying the bulb can take any desirable form. In some illustrative examples, the bulb is identified using at least one of a camera, a borescope, a UV sensor, a cup gauge, or other desirable sensor.

In some illustrative examples, aligning the inspection sensor relative to the bulb of the fastener comprises at least one of rotating the inspection sensor, extending the inspection sensor, or retracting the inspection sensor (operation **1116).** In some illustrative examples, placing the inspection sensor comprises extending a telescopic arm of a fastener bulb inspection device (operation **1118).** In some illustrative examples, rotating the inspection sensor comprises moving the telescopic arm using a gimbal connected to the telescopic arm (operation **1120)**.

In some illustrative examples, inspecting the bulb of the fastener comprises generating one of a photo or a video of the bulb of the fastener (operation **1122).** In some illustrative examples, inspecting the bulb of the fastener comprises at least one of laser inspecting the bulb of the fastener or LIDAR inspecting the bulb of the fastener (operation **1124).** In some illustrative examples, determining if the bulb of the fastener is within tolerance comprises overlaying the photo of the bulb on a reference image (operation **1126).**

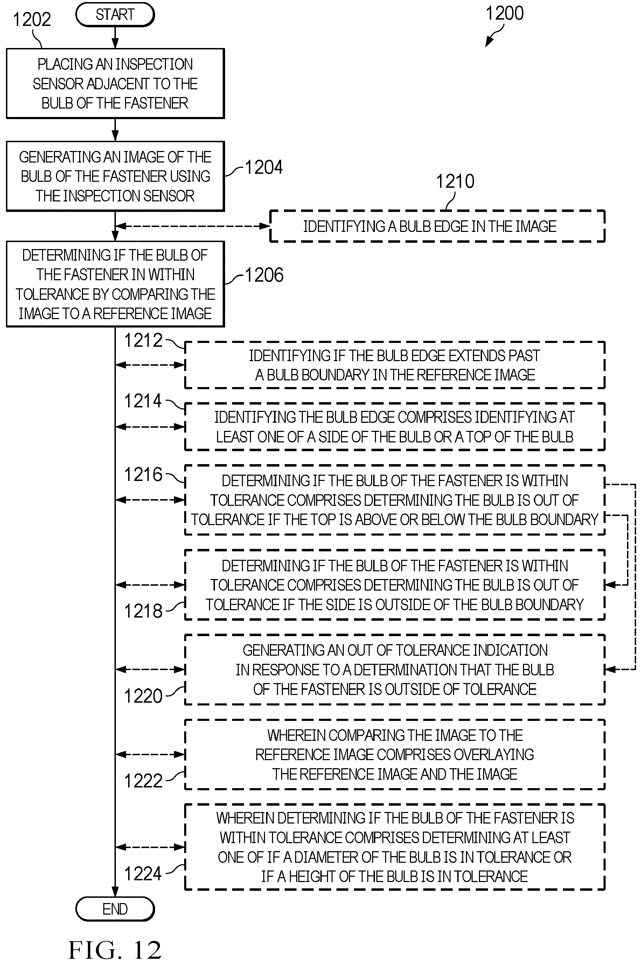

Turning now to **Figure 12****,** a flowchart of a method of inspecting a bulb of a fastener is depicted in accordance with an illustrative example. Method **1200** can be performed using fastener bulb inspection device **202** of **Figure 2****.** Method **1200** can be performed to inspect fastener **301** of **Figures 3** and 4 after installation. Method **1200** can be performed using fastener bulb inspection device **518** of **Figure 5****.** Method **1200** can be performed using fastener bulb inspection device **609** of **Figure 6****.** Method **1200** can be performed using fastener bulb inspection device **703** of **Figure 7****.** Method **1200** can be performed using fastener bulb inspection device **800** of **Figure 8****.** Method **1200** can be performed using an overlay such as view **900** of **Figure 9****.** Method **1200** can be performed using an overlay such as view **1000** of **Figure 10****.**

Method **1200** places an inspection sensor adjacent a bulb of a fastener (operation **1202).** Method **1200** generates an image of the bulb of the fastener using the inspection sensor (operation **1204).** Method **1200** determines if the bulb of the fastener is within tolerance by comparing the image to a reference image (operation **1206).** Afterwards, method **1200** terminates.

In some illustrative examples, comparing the image to the reference image comprises identifying a bulb edge in the image (operation **1210),** and identifying if the bulb edge extends past a bulb boundary in the reference image (operation **1212).** In some illustrative examples, identifying the bulb edge comprises identifying at least one of a side of the bulb or a top of the bulb (operation **1214).**

In some illustrative examples, determining if the bulb of the fastener is within tolerance comprises determining the bulb is out of tolerance if the top is above or below the bulb boundary (operation **1216).** In some illustrative examples, determining if the bulb of the fastener is within tolerance comprises determining the bulb is out of tolerance if the side is outside of the bulb boundary (operation **1218).**

In some illustrative examples, method **1200** generates an out of tolerance indication in response to a determination that the bulb of the fastener is outside of tolerance (operation **1220).** In some illustrative examples, comparing the image to the reference image comprises overlaying the reference image and the image (operation **1222).** In some illustrative examples, determining if the bulb of the fastener is within tolerance comprises determining at least one of if a diameter of the bulb is in tolerance or if a height of the bulb is in tolerance (operation **1224).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1110** through operation **1124** may be optional.

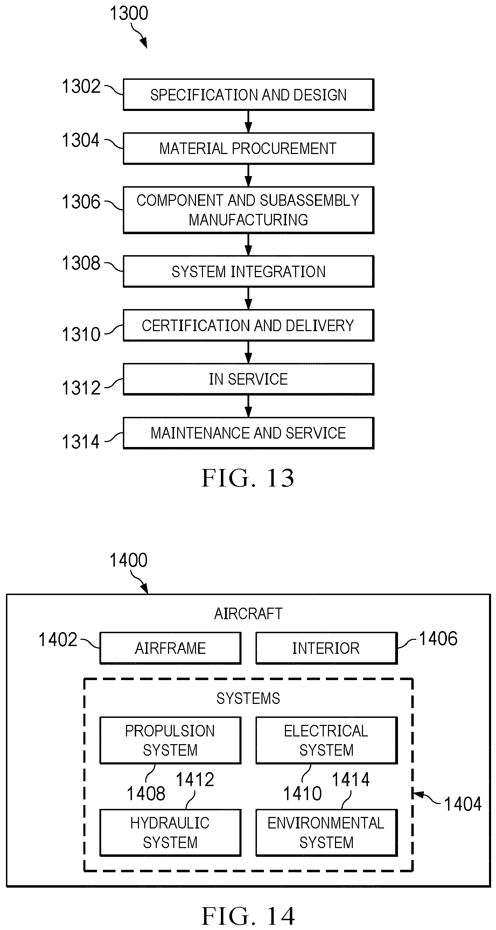

Illustrative examples of the present disclosure may be described in the context of aircraft manufacturing and service method **1300** as shown in **Figure 13** and aircraft **1400** as shown in **Figure 14****.** Turning first to **Figure 13****,** an illustration of an aircraft manufacturing and service method in a form of a block diagram is depicted in accordance with an illustrative example. During pre-production, aircraft manufacturing and service method **1300** may include specification and design **1302** of aircraft **1400** in **Figure 14** and material procurement **1304.**

During production, component and subassembly manufacturing **1306** and system integration **1308** of aircraft **1400** takes place. Thereafter, aircraft **1400** may go through certification and delivery **1310** in order to be placed in service **1312.** While in service **1312** by a customer, aircraft **1400** is scheduled for routine maintenance and service **1314,** which may include modification, reconfiguration, refurbishment, or other maintenance and service.

Each of the processes of aircraft manufacturing and service method **1300** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 14****,** an illustration of an aircraft in a form of a block diagram is depicted in which an illustrative example may be implemented. In this example, aircraft **1400** is produced by aircraft manufacturing and service method **1300** of **Figure 13** and may include airframe **1402** with plurality of systems **1404** and interior **1406.** Examples of systems **1404** include one or more of propulsion system **1408,** electrical system **1410,** hydraulic system **1412,** and environmental system **1414.** Any number of other systems may be included.

Apparatuses and methods embodied herein may be employed during at least one of the stages of aircraft manufacturing and service method **1300.** One or more illustrative examples may be manufactured or used during at least one of component and subassembly manufacturing **1306,** system integration **1308,** in service **1312,** or maintenance and service **1314** of **Figure 13****.**

Fastener bulb inspection device **202** of **Figure 2** can be used during component and subassembly manufacturing **1306,** system integration **1308,** or maintenance and service **1314** of **Figure 13** to inspect bulbs of fasteners. Fastener bulb inspection device **202** of **Figure 2** can be used to inspect fastener bulbs in at least one of airframe **1402** or interior **1406.** Method **1100** can be performed to inspect portions of airframe **1402** or interior **1406.** Method **1100** can be performed during at least one of component and subassembly manufacturing **1306,** system integration **1308,** or maintenance and service **1314** of **Figure 13****.**

The illustrative examples provide for bulb inspection of fasteners within confined spaces without the use of robotic systems. A fastener bulb inspection device utilizing hard tooling is provided. The fastener bulb inspection device provides for inspection of the whole bulb of the fastener.
The description of the different illustrative examples has been presented for purposes of illustration and description and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A fastener bulb inspection device (202) comprising:
a support (222) providing a desired vertical position (224) relative to an access hole (212) of a structure (210) with a fastener (204) to be inspected;
a gimbal (226) connected to the support (222); and
an inspection sensor (228) connected to the gimbal (226) by a telescopic (252) arm (250).

2. The fastener bulb inspection device (202) of claim 1, wherein the support (222) is telescopic (232).

3. The fastener bulb inspection device (202) of claim 1 or 2, further comprising:
a cart (256) connected to the support (222); and
a rail (258) configured to enable movement of the support (222) relative to the structure (210),
preferably wherein:
the rail is configured to be connected to a fixture (262) supporting the structure (210) or connected to the structure (210); and/or
the rail (258) is configured to be connected to a manufacturing floor (260).

4. The fastener bulb inspection device (202) of any one of claims 1-3, wherein:
the inspection sensor (228) comprises a cup gauge (246) for mechanical inspection; and/or
the inspection sensor (228) comprises a camera (240), the device preferably further comprising a computer system (278) with an image comparator (279) configured to identify an out of tolerance bulb (214) in an image (241) generated by the camera (240).

5. The fastener bulb inspection device (202) of any one of claims 1-4, wherein:
the inspection sensor (228) comprises a laser (242); and/or
the inspection sensor (228) is one of a number of sensors (236) connected to the telescopic (252) arm (250), and wherein the number of sensors (236) is further configured to perform alignment (264) of the inspection sensor (228) relative to the fastener (204).

6. The fastener bulb inspection device (202) of any one of claims 1-5, further comprising a communication device (280) configured to receive position information from a fastening device (274) for alignment (264) of the inspection sensor (228) relative to the fastener (204).

7. A fastener bulb inspection device (202) comprising:
a telescopic (252) arm (250);
a gimbal (226) connected to a first side of the telescopic (252) arm (250); and
an inspection sensor (228) connected to a second side of the telescopic (252) arm (250), the inspection sensor (228) configured to inspect a bulb (214) of a fastener (204).

8. The fastener bulb inspection device (202) of claim 7, wherein the inspection sensor (228) is part of a number of sensors (236) connected to the telescopic (252) arm (250), wherein the number of sensors (236) comprise at least one of a borescope (238), a camera (240), a laser (242), LIDAR (244), a cup gauge (246), or a RFID detector (248), preferably wherein:
the number of sensors (236) comprises at least one sensor configured to perform alignment (264) of the inspection sensor (228).

9. A method (1100) of inspecting a bulb (214) of a fastener (204) comprising:
placing (1102) an inspection sensor (228) into a confined space (206) containing the bulb (214) of the fastener (204);
aligning (1104) the inspection sensor (228) relative to the bulb (214) of the fastener (204);
inspecting (1106) the bulb (214) of the fastener (204); and
determining (1108) if the bulb (214) of the fastener (204) is within tolerance.

10. The method (1100) of claim 9, wherein:
(910) aligning the inspection sensor (228) comprises positioning the inspection sensor (228) above the bulb (214) of the fastener (204); and/or
aligning the inspection sensor (228) comprises positioning (1111) the inspection sensor (228) adjacent the bulb (214) of the fastener (204) so that a diameter (218) and a height (217) of the bulb (214) is visible to the inspection sensor (228); and/or
(1112) aligning the inspection sensor (228) comprises utilizing numerically controlled movement based on a designed location for the fastener (204); and/or
(1114) aligning the inspection sensor (228) comprises identifying the bulb (214) of the fastener (204) within the confined space (206) and moving the inspection sensor (228) relative to the bulb (214) based on the identifying; and/or
(1116) aligning the inspection sensor (228) relative to the bulb (214) of the fastener (204) comprises at least one of rotating the inspection sensor (228), extending the inspection sensor (228), or retracting the inspection sensor (228); and/or
(1109) aligning the inspection sensor (228) comprises moving the inspection sensor (228) based on location data received from a fastening device (274).

11. The method (1100) of claim 9 or 10, wherein:
(1122) inspecting the bulb (214) of the fastener (204) comprises generating one of a photo or a video of the bulb (214) of the fastener (204), preferably wherein (1126) determining if the bulb (214) of the fastener (204) is within tolerance comprises overlaying the photo (241) of the bulb (214) on a reference image (281); and/or
(1124) inspecting the bulb (214) of the fastener (204) comprises at least one of laser (242) inspecting the bulb (214) of the fastener (204) or LIDAR (244) inspecting the bulb (214) of the fastener (204).

12. The method (1100) of any one of claims 9-11, wherein (1118) placing the inspection sensor (228) comprises extending a telescopic (252) arm (250) of a fastener bulb inspection device (202), preferably wherein (1120) rotating the inspection sensor (228) comprises moving the telescopic (252) arm (250) using a gimbal (226) connected to the telescopic (252) arm (250).

13. A method (1200) of inspecting a bulb (214) of a fastener (204) comprising:
placing (1202) an inspection sensor (228) adjacent a bulb (214) of a fastener (204);
generating (1204) an image (241) of the bulb (214) of the fastener (204) using the inspection sensor (228); and
determining (1206) if the bulb (214) of the fastener (204) is within tolerance by comparing the image (241) to a reference image (281).

14. The method (1200) of claim 13, wherein comparing the image (241) to the reference image (281) comprises:
identifying (1210) a bulb edge (243) in the image (241); and
identifying (1212) if the bulb edge (243) extends past a bulb boundary (283) in the reference image (281), preferably wherein identifying (1214) the bulb edge (243) comprises identifying at least one of a side (247) of the bulb (214) or a top (245) of the bulb (214);
further preferably wherein determining (1216) if the bulb (214) of the fastener (204) is within tolerance comprises determining the bulb (214) is out of tolerance if the top (245) is above or below the bulb boundary (283), or
determining (1218) if the bulb (214) of the fastener (204) is within tolerance comprises determining the bulb (214) is out of tolerance if the side (247) is outside (247) of the bulb boundary (283).

15. The method (1200) of claim 13 or 14, wherein:
(1222) comparing the image (241) to the reference image (281) comprises overlaying the reference image (281) and the image (241); and/or
(1224) determining if the bulb (214) of the fastener (204) is within tolerance comprises determining at least one of if a diameter (218) of the bulb (214) is in tolerance or if a height (217) of the bulb (214) is in tolerance.
